# EUROPÄISCHE PATENTSCHRIFT

(11) **EP 0 870 066 B1**
(45) Veröffentlichungstag und Bekanntmachung des Hinweises auf die Patenterteilung: **30.01.2002**
(21) Anmeldenummer: 97934372.0
(22) Anmeldetag: 06.08.1997
(51) Int. Cl.: C21C 5/56, F27D 13/00, C21C 5/48, C10J 3/57

(54) **VERFAHREN ZUM AUFARBEITEN VON MÜLL SOWIE VORRICHTUNG ZUR DURCHFÜHRUNG DIESES VERFAHRENS**
METHOD AND FACILITY FOR REPROCESSING WASTE
PROCEDE ET INSTALLATION DE RETRAITEMENT DE DECHETS

(30) Priorität: 27.08.1996 AT 152896
(43) Veröffentlichungstag der Anmeldung: 14.10.1998
(73) Patentinhaber: Holcim Ltd., 8645 Jona (CH)
(72) Erfinder: EDLINGER, Alfred, CH-5400 Baden (CH)
(74) Vertreter: Haffner, Thomas M.
(86) Internationale Anmeldenummer: AT9700183
(87) Internationale Veröffentlichungsnummer: WO9808984

(56) Entgegenhaltungen:
- EP-A- 0 024 637
- EP-A- 0 096 212
- EP-A- 0 208 881
- DE-A- 3 148 550
- DE-A- 4 306 207
- DE-B- 2 304 369

## Beschreibung

Die Erfindung bezieht sich auf ein Verfahren zum Aufarbeiten von Müll, wie z.B. Restmüll aus Haushaltsmüll, Gewerbemüll, Sperrmüll, oder Klärschlamm, bei welchem der Müll bzw. Klärschlamm unter sauerstoffarmer Atmosphäre einer Pyrolyse unterworfen wird und die Feststoffe einer mechanischen Aufbereitung und Siebung unterworfen werden, sowie auf eine Vorrichtung zur Durchführung dieses Verfahrens.

Für die Aufarbeitung von Müll wurde bereits vorgeschlagen den Abfall, welcher aus Hausmüll, hausmüllähnlichem Gewerbemüll, Sperrmüll und Klärschlamm besteht, in einer ersten Verfahrensstufe einer Pyrolyse zu unterwerfen. Im Anschluß an eine derartige Pyrolyse, welche bei Temperaturen unter 500° C und zumeist bei Temperaturen von etwa 450° C unter Sauerstoffmangel vorgenommen wurde, erfolgte bei bekannten Verfahren beispielsweise eine Kühlung mittels einer Kühlschwingrinne auf Temperaturen von unter 150° C, worauf in einer Siebeinrichtung eine Grobfraktion und eine Feinfraktion gebildet wurde. Im Zuge dieser Konversion bzw. Verschwelung konnte festgestellt werden, daß die Grobfraktion hauptsächlich ferritische Metalle, Nicht-Eisenmetalle und inertes Material, wie beispielsweise Glas, Keramik, Steine und Porzellan enthält, wohingegen die Feinfraktion nahezu quantitativ den Kohlenstoff aus dem eingebrachten Müll enthält. Die Feinfraktion mit Korngrößen von über 1 mm wurde bei bekannten Verfahren zerkleinert und gemeinsam mit dem Schwelgas einer Hochtemperaturverbrennung unterworfen. Aufgrund der erhöhten Kohlenstoffkonzentration in der Feinfraktion wurde ein Brennstoff mit hohem Heizwert bereitgestellt. Die nachfolgende Hochtemperaturverbrennung wurde zur Energieerzeugung, insbesondere zur Verstromung oder zur Herstellung von Fernwärme ausgenutzt, wobei bei dieser Verbrennung eine Aschenschmelze bzw. Schlacke gebildet wurde, die zu einem verglasten Schlackengranulat in einem Wasserbad granuliert werden konnte.

Im Anschluß an eine Pyrolyse von Restmüll wurde weiters bereits vorgeschlagen, in einer ersten Stufe eine weitestgehende chemische Reduktion vorzunehmen, worauf anschließend stufenweise oxidiert wurde, um Wertstoffe, insbesondere Metallfraktionen gesondert ausbringen zu können.

Die Erfindung zielt nun darauf ab, ein Verfahren der eingangs genannten Art dabingehend weiterzubilden, daß unter Verbesserung der energetischen Nutzung Schlackenfraktionen gebildet werden können, welche frei von Schwermetallen und insbesondere frei von Chrom anfallen, sodaß die Schlackenfraktion unmittelbar als Zementzumahlstoff bzw. puzzolanisches Ausgangsmaterial Verwendung finden kann und die metallischen Anteile besser rückgewonnen werden können.

Zur Lösung dieser Aufgaben besteht das erfindungsgemäße Verfahren im wesentlichen darin, daß die von Metallen mechanisch getrennte Grobfraktion der Siebung einem Metallbadreaktor aufgegeben wird, daß die Feinfraktion der Siebung in das Metallbad mit einem Trägergas zum Aufkohlen des Metallbades eingedüst wird und daß das Pyrolysegas zumindest teilweise als Brenngas zum Aufschmelzen und Erhitzen des auf dem Metall des Metallbades aufschwimmenden Schlackenbades eingesetzt wird. Dadurch, daß im Anschluß an die Konversion bzw. Verschwelung in einem Pyrolysereaktor ein Metallbadreaktor vorgesehen ist, können die gesondert nach der Siebung anfallenden Fraktionen in einer Weise eingesetzt werden, welche eine quantitative Abtrennung von Schwermetallen und Buntmetallen aus den mineralischen Phasen ermöglicht. Dadurch, daß die Feinfraktion der Siebung in das Metallbad mit einem Trägergas eingedüst wird, kann das Metallbad in entsprechender Weise aufgekohlt werden. Ein derartiges aufgekohltes Metallbad wird in der Folge mit der aufgeschmolzenen Schlackenfraktion bzw. den geschmolzenen Feststoffen der Pyrolyse umgesetzt, wobei metallische Anteile aus dieser Schlackenfraktion in das Metallbad reduziert werden und ein von Schwermetallen und Buntmetallen freies Schlackenprodukt erzielt wird. Aufgrund des hohen Heizwertes des Schwelgases bzw. Pyrolysegases kann dieses zum Aufschmelzen und Erhitzen des auf dem Metall des Metallbades aufschwimmenden Schlackenbades eingesetzt werden, wodurch eine hohe Effizienz ohne zusätzliches Energieeinbringen erzielt wird. Insgesamt werden somit reinere Endprodukte ohne zusätzliches Energieeinbringen erzielt, wobei sich das Verfahren durch hohe Wirtschaftlichkeit auszeichnet. Gleichzeitig wird ein hochwertiges Puzzolan für die Zementindustrie hergestellt. Aufgrund der im Metallbadreaktor erfolgenden Reduktion von metallischen Anteilen, lassen sich auch Problemstoffe, wie beispielsweise Galvanikschlämme, Klärschlämme und Autoschredderleichtfraktionen ohne Kontamination des Endproduktes einsetzen, sodaß insgesamt reine Endprodukte gebildet werden, wobei metallische Anteile mit dem Metallbad ausgetragen werden können und in der Folge gesondert aufgearbeitet werden können.

Mit Vorteil wird das erfindungsgemäße Verfahren so durchgeführt, daß als Trägergas für das Eindüsen der Feinfraktion in das Metallbad ein Inertgas, insbesondere Stickstoff, verwendet wird.

Die mechanische Aufbereitung erlaubt es einen erheblichen Anteil der metallischen Fraktion nach der Pyrolyse und nach der Kühlung des Pyrolysekokses beispielsweise unter Verwendung von Magnetscheidern abzutrennen, wobei der hohe Kohlenstoffanteil der Feinfraktion, welche gegebenenfalls mit einem Walzenbrecher zusätzlich zerkleinert wurde, ein unmittelbares Eindüsen in den Eisenbadreaktor erlaubt. Um das gewünschte Reduktionspotential des Metallbades sicher einzuhalten und um überschüssigen Kohlenstoff im Bad zu verbrennen, wird mit Vorteil so vorgegangen, daß in das Metallbad Sauerstoff oder Luft über gekühlte, insbesondere mit Kohlenwasserstoffen ummantelte Düsen eingeblasen wird. Durch Einstellung der jeweils eingeblasenen Menge der Feinfraktion und des eingeblasenen Sauerstoffes, läßt sich das für die quantitative Reduktion metallischer Anteile im Schlackenbad erforderliche Reduktionspotential des Metallbades in den gewünschten Grenzen einstellen.

Mit Vorteil wird erfindungsgemäß als Metallbad ein Eisenbad vorgelegt.

Eine besonders effiziente Verbrennung des bei der Pyrolyse gebildeten Pyrolysegases gelingt dadurch, daß, wie es einer bevorzugten Weiterbildung des erfindungsgemäßen Verfahrens entspricht, die Pyrolysegase über in den Reaktorraum oberhalb des Schlackenbades mündende Brenner mit Heißluft und/oder Sauerstoff verbrannt werden. Als Brenner können in diesem Fall konventionelle Brenner eingesetzt werden, welchen Heißluft bzw. Sauerstoff über einen zentralen Kanal und die Pyrolysegase über einen Ringkanal zugeführt werden.

Das bei der Vergasung des Kohlenstoffes im Metall und bei der Verbrennung des Pyrolysegases zum Aufschmelzen der Schlacken entstehende heiße Abgas enthält neben der fühlbaren Wärme noch chemische Energie. Mit Vorteil werden diese Metallbadreaktorabgase zur Vorwärmung der Verbrennungsheißluft für die Verbrennung des Pyrolysegases eingesetzt, wofür das Verfahren so durchgeführt wird, daß die Verbrennungsheißluft durch die Metallbadreaktorabgase erwärmt wird.

Der Gesamtprozeß einschließlich der Müllvorbehandlung läuft exotherm, d.h. mit Energieüberschuß, ab, sodaß ein nicht unerheblicher Teil der Pyrolysegase beispielsweise verstromt werden kann. Eine weitergehende energetische Nutzung der abgekühlten Metallbadreaktorabgase kann mit Vorteil in der Weise erfolgen, daß ein Teil der Pyrolysegase mit den den rekuperativen Wärmetauscher verlassenden gekühlten Metallbadreaktorabgasen und Luft verbrannt wird und daß die Verbrennungsabgase nach energetischer Verwertung einer Abgasreinigung unterworfen werden, wofür diese Gase in einer weiteren Brennkammer unter Luftzufuhr verbrannt werden. Im Anschluß an die energetische Verwertung, welche naturgemäß auch die Herstellung von Fernwärme sein kann, erfolgt eine konventionelle Rauchgasreinigung, wobei das Verfahren hier mit Vorteil so durchgeführt wird, daß aus der Abgasreinigung Stäube, insbesondere Filterstäube, abgezogen und einer basischen Wäsche unterworfen werden, worauf die gebildeten Hydroxidschlämme dem Schlackenbad des Metallbadreaktors aufgegeben werden. Auch hier gelingt somit eine Schließung des Kreislaufes um Problemstoffe, wie sie bei der Abgasreinigung gebildet werden, in der Folge sicher entsorgen zu können.

Um sicherzustellen, daß die gewünschte Grenzflächenreaktion zwischen flüssigem Metallbad und flüssiger Schlacke rasch und gleichmäßig erfolgt, ist es vorteilhaft, eine Mindesthöhe des Metallbades sicherzustellen, sodaß ein Durchblasen durch das Einblasen von Pyrolysekoks und Sauerstoff und überhöhte Turbulenzen vermieden werden. Mit Vorteil wird das Verfahren zu diesem Zweck so durchgeführt, daß das Metallbad des Metallbadreaktors über einen Rinnenüberlauf kontinuierlich ausgetragen wird, wodurch gleichzeitig die gewünschte Metallbadhöhe eingestellt werden kann. Die abgezogene Legierung enthält alle in der mechanischen Vorabtrennung noch nicht abgetrennten metallischen Anteile und kann in bekannter Weise weiter fraktioniert und aufgearbeitet werden.

Die erfindungsgemäße Vorrichtung zur Durchführung dieses Verfahrens ist im wesentlichen gekennzeichnet durch eine Pyrolysetrommel, eine Kühleinrichtung für die Feststoffe, eine Siebvorrichtung und einen Metallbadreaktor mit in das Metallbad mündenden Unterbad- bzw. Bodendüsen für den Eintrag der Feinfraktion der Siebvorrichtung und den Eintrag von Luft bzw. Sauerstoff, wobei in den Gasraum des Metallbadreaktors mündende Brenner für das Pyrolysogas angeordnet sind und an das Metallbad eine Überlaufrinne für den Austrag von flüssigem Metall bei im wesentlichen konstanter Höhe des Metallbades angeschlossen ist. Mit Vorteil kann diese Vorrichtung so weitergebildet sein, daß dem Austrag für die schmelzflüssige Schlacke ein Granulator, insbesondere ein Dampfgranulator, für die Herstellung eines puzzolanischen Granulates nachgeschaltet ist, wodurch unmittelbar ein hochreines vollständig verglastes puzzolanisches Granulat gebildet wird.

Die Erfindung wird nachfolgend anhand eines Ausführungsbeispieles und anhand der Zeichnung näher erläutert.

Es wurden eine Tonne Hausmüll einer Pyrolyse bei 450° C unterworfen, wobei 650 kg Pyrolysegas und 350 kg Feststoffe gebildet wurden. Die gebildeten Feststoffe wurden nach einer Kühlung einer mechanischen Aufbereitung bzw. Siebung unterworfen, wobei hier 32 kg Metall, 55 kg Kohlestaub und 263 kg mineralische Anteile getrennt werden konnten. Der Kohlestaub wurde in der Folge mit 3 kg Stickstoff in ein Metallbad eingeblasen, wobei auf dieses Metallbad die mineralische Fraktion aufgebracht wurde. Eine Teilmenge des Pyrolysegases, nämlich 35 kg, wurde mit Heißwind im Gasraum des Metallbadreaktors verbrannt. Zusätzlich wurden 73 kg Sauerstoff mit 8 kg Methan ummantelt in das Metallbad eingedüst.

Das gebildete Metallbadreaktorabgas fiel in einer Menge von 130 kg an und enthielt neben CO, CO₂, H₂ und H₂O noch Restmengen an Zink und Blei. Dieses Heißgas wurde über einen Regenerativwärmetauscher geführt, wodurch die Verbrennungsluft für die Verbrennung des Pyrolysegases vorgewärmt wurde. Im Anschluß erfolgte eine weitere Verbrennung dieses Heißgases gemeinsam mit der Restmenge des Pyrolysegases in einer Brennkammer zur Verstromung.

Der bei der nachfolgenden Rauchgasreinigung anfallende Filterstaub wurde einer basischen Wäsche unterworfen, wobei die Hydroxidschlämme gemeinsam mit der mineralischen Fraktion der mechanischen Aufbereitung dem Eisenbadreaktor rückgeführt bzw. aufgegeben wurden.

Aus dem Eisenbadreaktor wurden 16 kg Legierung und 247 kg eines hochreinen puzzolanischen Produktes abgezogen, wobei das gebildete Puzzolan die nachfolgende chemische Analyse aufwies:

| Komponente | Anteil (%) |
|---|---|
| SiO₂ | 57 |
| CaO | 15 |
| Al₂O₃ | 17 |
| Na₂O | 4 |
| K₂O | 3 |
| MgO | 2 |

Die gebildete flüssigpuzzolanische Schlackenschmelze fällt bei Temperaturen von ca. 1430° C an und wurde in der Folge im Wasserbadfluß bei einem Verhältnis von Schlacke/Wasser von ungefähr 10 im dünnen Schlackenstrahl granuliert. Besonders vorteilhaft hat sich hier die Verwendung einer Dampfstrahlgranulation herausgestellt, da hier extrem hohe Kühlgeschwindigkeiten bei stark vermindertem Wasserbedarf erzielt werden. Das gebildete Puzzolan lag vollständig glasig vor und kann ohne weiteres bis zu 35 Gew.% Klinker im Zement ersetzen.

Die auf diese Weise gebildeten Zemente zeichnen sich durch extrem hohe Endfestigkeiten bei gleichzeitig geringer Hydradationswärme-Erzeugung aus. Derartige Zemente sind somit besonders für Massenbetone, wie beispielsweise für Staumauern, Tunnel oder Fundamente geeignet. Die zementtechnologischen Werte konnten wie folgt erhalten werden:
- Festigkeits-Aktivitäts-Index (ASTM 311-90) = 118% (nach 28 Tagen)
- Keil-Index (R₅₀ = 8 - 10%) = 89% (nach 28 Tagen)
- Keil-Index (R₆₀ = 8 - 10%) = 62% (nach 7 Tagen)

Die geforderten Festigkeiten der Betonqualität B25/35 konnte ohne weiteres eingehalten werden. So liegen die Festigkeiten bereits nach 28 Tagen bei 48,4 N/mm² (Bohrkern- Test).

Der gebildete Metall-Regulus bzw. die abgezogene Legierung wies folgende Zusammensetzung auf:

| Metall | Anteil (%) |
|---|---|
| Fe | 75 |
| P | 14 |
| Cr | 2 |
| Mn | 3 |
| Ni | 1 |
| Cu | 4 |

Eine derartige Legierung kann beispielsweise durch fraktionierte Oxidation aufgearbeitet werden, wobei auch die Gewinnung von hochangereicherter Chromschlacke zur Ferrochrombildung praktisch durchführbar ist.

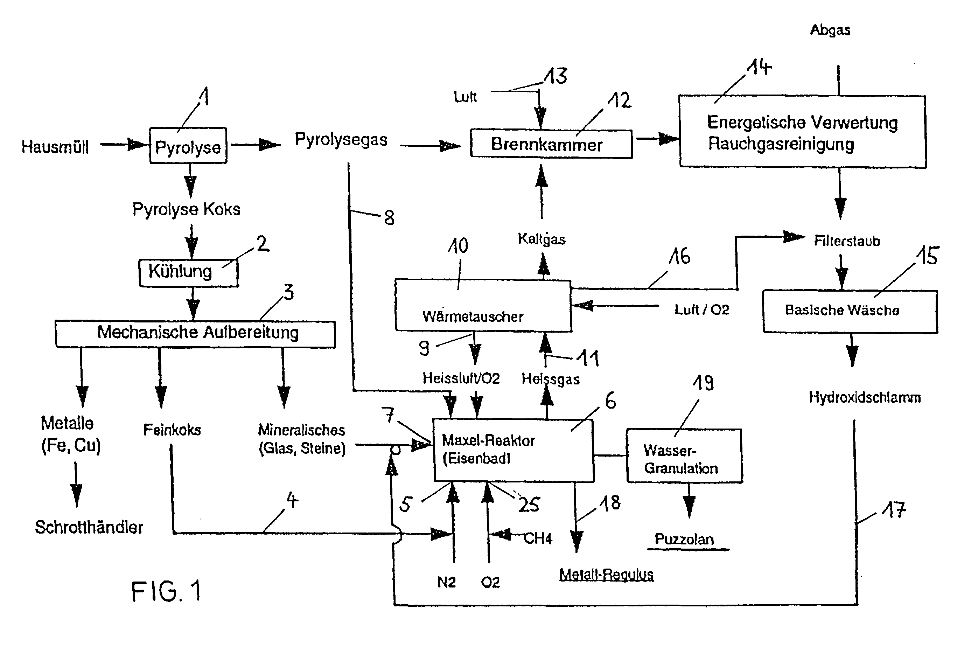

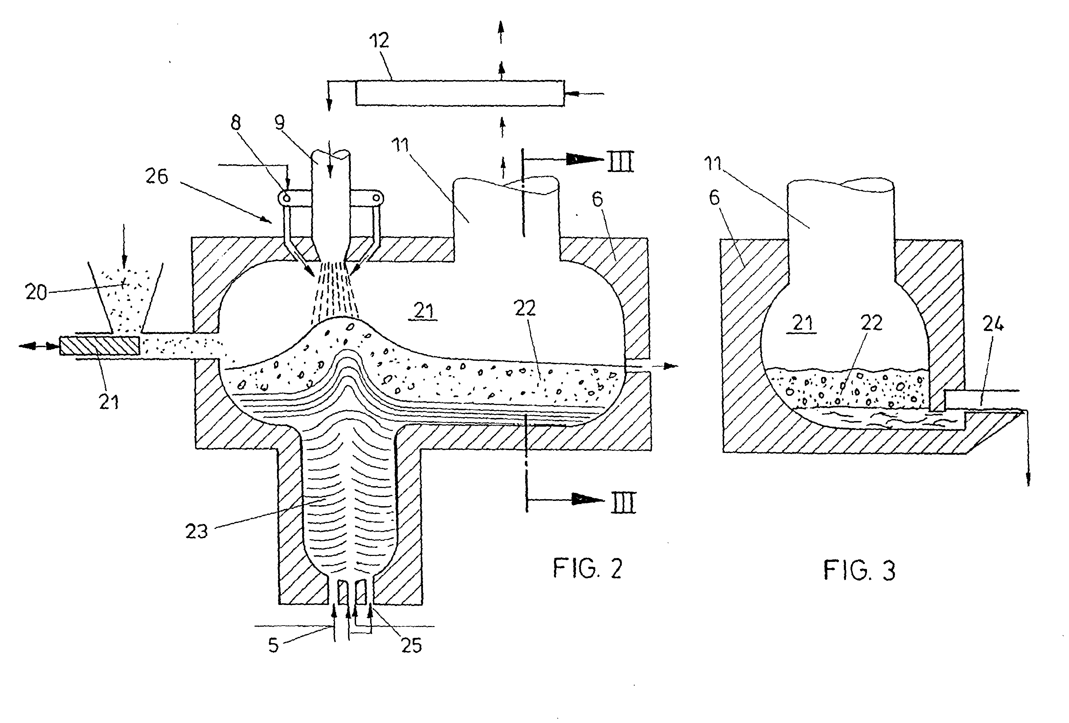

In der Zeichnung ist die erfindungsgemäß vorgesehene Vorrichtung näher erläutert, wobei Fig. 1 ein Verfahrensfließbild darstellt, Fig. 2 stellt einen Schnitt durch den Eisenbadreaktor und Fig. 3 einen Schnitt nach der Linie III-III der Fig. 2 dar.

Wie sich aus dem Verfahrensfließbild nach Fig. 1 ergibt, wird Hausmüll einer Pyrolyse 1 zugeführt, in welcher der aufgegebene Müll, welcher gegebenenfalls auch Klärschlamm und Galvanikschlämme enthalten kann, bei Temperaturen von etwa 450° C unter Sauerstoffmangel pyrolysiert wurde. Der abgezogene Pyrolysekoks wurde einer Kühlung 2 unterworfen, worauf eine mechanische Aufbereitung 3 vorgenommen wurde. In der mechanischen Aufbereitung, welche auch eine Siebung enthält, konnten Metalle, wie Eisen und Kupfer, vorabgetrennt werden. Der gebildete Feinkoks kann pneumatisch über eine Leitung 4 gemeinsam mit Stickstoff über Bodendüsen 5 in ein Eisenbad eines Eisenbadreaktors 6 eingedüst werden. Über weitere Bodendüsen 25 kann Sauerstoff, mit Kohlenwasserstoff ummantelt, in das Metallbad eingebracht werden.

Die gröbere Fraktion enthält alle mineralischen Anteile, wie beispielsweise Glas und Steine und wird über einen Bunker und eine Aufgabe 7 dem Eisenbadreaktor 6 aufgegeben.

Ein Teil des die Pyrolyse verlassenden Pyrolysegases wird gemeinsam mit Heißluft über einen Brenner 26 im Gasraum des Eisenbadreaktors 6 verbrannt. Das Pyrolysegas wird hiebei über eine Leitung 8 und die Heißluft über eine Leitung 9 zugeführt. Die Heißluft wurde zuvor in einem regenerativen Wärmetauscher 10 vorgewärmt, wobei der regenerative Wärmetauscher mit dem heißen Eisenbadreaktorabgas, welches aus dem Reaktor 6 über eine Leitung 11 abgezogen wurde, vorgewärmt wird.

Dieses heiße Eisenbadreaktorabgas wird nach der Kühlung einer Brennkammer 12 zugeführt, in welcher dieses Eisenbadreaktorabgas gemeinsam mit dem Großteil des Pyrolysegases unter Zuführung von Luft über die Leitung 13 verbrannt wird. Nach einer schematisch mit 14 angedeuteten energetischen Verwertung erfolgt eine Rauchgasreinigung, wobei der gebildete Filterstaub einer basischen Wäsche 15 zugeführt wird. Auch hier kann über den regenerativen Wärmetauscher 10 vorgewärmte Luft über eine Leitung 16 zum pneumatischen Transport des Filterstaubes eingesetzt werden. Der gebildete Hydroxidschlamm wird über eine Leitung 17 der Aufgabe 7 für die mineralische Fraktion aus der mechanischen Aufbereitung 3 rückgeführt.

Aus dem Eisenbadreaktor 6 wird über einen Abstich 18 ein Metall-Regulus ausgetragen. Die Schlacke wird anschließend in einer Wassergranulation 19 zu verglastem puzzolanischen Granulat verarbeitet.

Wie sich aus den Fig. 2 und 3 erkennen läßt, kann ein konstruktiv einfacher Metallbadreaktor eingesetzt werden. Der Eisenbadreaktor ist hiebei wiederum mit 6 bezeichnet.

Der mineralische Anteil gelangt aus einem Bunker 20 über einen Stössel 21 in den Reaktorraum, wobei der Gasraum mit 21 bezeichnet ist. Das Pyrolysegas wird mittels Ringbrennern mit Heißluft verbrannt und führt zum Aufschmelzen der Feststoffe, wobei eine flüssige Schlacke 22 gebildet wird. Das Eisenbad des Eisenbadreaktors ist mit 23 bezeichnet. Über die Bodendüse 5 wird der entsprechend zerkleinerte Pyrolysekoks gemeinsam mit Stickstoff eingeblasen, wobei zusätzlich Methan und Sauerstoff über Bodendüsen 25 eingeblasen werden.

Wie sich aus Fig. 3 ersehen läßt, erfolgt ein kontinuierlicher Abstich der Legierung über einen Metall-Syphon 24, wobei gleichzeitig die Höhe des Eisenbades konstant gehalten wird.

Insgesamt wird somit bei geringem konstruktiven Aufwand und hoher energetischer Nutzung eine hervorragende Reinigung der unterschiedlich anfallenden der Pyrolyse aufgegeben Ausgangsmaterialien erzielt, sodaß Wertstoffe sowie unmittelbar gewerblich einsetzbare Produkte gebildet werden, wobei aufgrund des exothermen Prozesses ein hohes Maß an Energierückgewinnung gelingt. Durch die weitestgehende Kreislaufführung aller Problemstoffe ist auch die Abgasbelastung auf das gegenwärtig technisch Mögliche beschränkt.

## Patentansprüche

1. Verfahren zum Aufarbeiten von Müll, wie z.B. Restmüll aus Haushaltsmüll, Gewerbemüll, Sperrmüll, oder Klärschlamm, bei welchem der Müll bzw. Klärschlamm unter sauerstoffarmer Atmosphäre einer Pyrolyse (1) vorbehandelt wird und die Feststoffe einer mechanischen Aufbereitung (3) und Siebung unterworfen werden, **dadurch gekennzeichnet, daß** die von Metallen mechanisch getrennte Grobfraktion der Siebung einem Metallbadreaktor (6) aufgegeben wird, daß die Feinfraktion der Siebung in das Metallbad (23) mit einem Trägergas zum Aufkohlen des Metallbades (23) eingedüst wird und daß das Pyrolysegas zumindest teilweise als Brenngas zum Aufschmelzen und Erhitzen des auf dem Metall des Metallbades (23) aufschwimmenden Schlackenbades (22) eingesetzt wird.

2. Verfahren nach Anspruch 1, **dadurch gekennzeichnet, daß** als Trägergas für das Eindüsen der Feinfraktion in das Metallbad (23) ein Inertgas, insbesondere Stickstoff, verwendet wird.

3. Verfahren nach Anspruch 1 oder 2, **dadurch gekennzeichnet, daß** in das Metallbad (23) Sauerstoff oder Luft über gekühlte, insbesondere mit Kohlenwasserstoffen ummantelte Düsen (25) eingeblasen wird.

4. Verfahren nach Anspruch 1, 2 oder 3, **dadurch gekennzeichnet, daß** als Metallbad (23) ein Eisenbad vorgelegt wird.

5. Verfahren nach einem der Ansprüche 1 bis 4, **dadurch gekennzeichnet, daß** die Pyrolysegase über in den Reaktorraum oberhalb des Schlackenbades (22) mündende Brenner (26) mit Heißluft und/oder Sauerstoff verbrannt werden.

6. Verfahren nach Anspruch 5, **dadurch gekennzeichnet, daß** die Verbrennungsheißluft durch die Metallbadreaktorabgase erwärmt wird.

7. Verfahren nach einem der Ansprüche 1 bis 6, **dadurch gekennzeichnet, daß** ein Teil der Pyrolysegase mit den den Wärmetauscher (10) verlassenden gekühlten Metallbadreaktorabgasen und Luft verbrannt wird und daß die Verbrennungsabgase nach energetischer Verwertung einer Abgasreinigung (14) unterworfen werden.

8. Verfahren nach einem der Ansprüche 1 bis 7, **dadurch gekennzeichnet, daß** aus der Abgasreinigung (14) Stäube, insbesondere Filterstäube, abgezogen und einer basischen Wäsche (15) unterworfen werden, worauf die gebildeten Hydroxidschlämme dem Schlackenbad (22) des Metallbadreaktors (6) aufgegeben werden.

9. Verfahren nach einem der Ansprüche 1 bis 8, **dadurch gekennzeichnet, daß** das Metallbad (23) des Metallbadreaktors (6) über einen Rinnenüberlauf kontinuierlich ausgetragen wird.

10. Vorrichtung zur Durchführung des Verfahrens nach einem der Ansprüche 1 bis 9, **gekennzeichnet durch** eine Pyrolysetrommel, eine Kühleinrichtung für die Feststoffe, eine Siebvorrichtung und einen Metallbadreaktor (6) mit in das Metallbad (23) mündenden Unterbad- bzw. Bodendüsen (5,25) für den Eintrag der Feinfraktion der Siebvorrichtung und den Eintrag von Luft bzw. Sauerstoff, wobei in den Gasraum des Metallbadreaktors (6) mündende Brenner für das Pyrolysegas angeordnet sind und an das Metallbad (23) eine Überlaufrinne für den Austrag von flüssigem Metall bei im wesentlichen konstanter Höhe des Metallbades (23) angeschlossen ist.

11. Vorrichtung nach einem der Ansprüche 1 bis 10, **dadurch gekennzeichnet, daß** dem Austrag für die schmelzflüssige Schlacke ein Granulator, insbesondere ein Dampfgranulator, für die Herstellung eines puzzolanischen Granulates nachgeschaltet ist.

## Claims

1. A method for processing waste such as, e.g. residual waste from household refuse, industrial waste, bulky refuse, or sewage sludge, in which the waste or sewage sludge is pretreated under the low-oxgen atmosphere of pyrolysis (1) and the solids are subjected to mechanical pretreatment (3) and screening, **characterized in that** the coarse fraction derived from screening and mechanically separated from metals is charged into a metal bath reactor (6), that the fine fraction derived from screening is nozzled into the metal bath (23) along with a carrier gas to carburize said metal bath (23), and that the pyrolysis gas is used at least partially as a fuel gas to melt and heat the slag bath (22) floating on the metal of the metal bath (23).

2. A method according to claim 1, **characterized in that** an inert gas, in particular nitrogen, is used as said carrier gas to nozzle said fine fraction into the metal bath (23).

3. A method according to claim 1 or 2, **characterized in that** oxygen or air is blown into the metal bath (23) via cooled, in particular hydrocarbon-wrapped, nozzles (25).

4. A method according to claim 1, 2 or 3, **characterized in that** an iron bath is provided as said metal bath (23).

5. A method according to any one of claims 1 to 4, **characterized in that** the pyrolysis gases are burned by hot air and/or oxygen via burners (26) opening into the reactor space above the slag bath (22).

6. A method according to claim 5, **characterized in that** the hot air from combustion is heated by the metal bath reactor offgases.

7. A method according to any one of claims 1 to 6, **characterized in that** a portion of the pyrolysis gases is burned by the cooled metal bath reactor offgases leaving the heat exchanger (10) and air, and that the combustion offgases are subjected to offgas cleaning(14) after energetic utilization.

8. A method according to any one of claims 1 to 7, **characterized in that** dusts, in particular filter dusts, are removed from offgas cleaning and subjected to basic washing (15), whereupon the hydroxide slurries formed are charged onto the slag bath (22) contained in the metal bath reactor (6).

9. A method according to any one of claims 1 to 8, **characterized in that** the metal bath (23) contained in the metal bath reactor (6) is continuously discharged via an overflow gutter.

10. A device for carrying out the method according to any one of claims 1 to 9, **characterized by** a pyrolysis drum, a cooling means for solids, a screening means and a metal bath reactor (6) including submerged or bottom tuyeres (5, 25) opening into the metal bath (23) to introduce the fine fraction of the screening means as well as air and/or oxygen, whereby burners opening into the gas space of the metal bath reactor (6) are arranged for the pyrolysis gas and an overflow gutter is connected to the metal bath (23) for the discharge of molten metal at a substantially constant height of the metal bath (23).

11. A device according to any one of claims 1 to 10, **characterized in that** a granulator, in particular a vapor granulator, is arranged to follow the molten slag discharge and used to produce puzzolanic granulates.

## Revendications

1. Procédé de retraitement de déchets, tels que par exemple des déchets résiduels d'ordures ménagères, des déchets industriels, des déchets encombrants, ou de boues de curage, selon lequel les déchets ou les boues de curage sont traités préalablement par pyrolyse (1) sous atmosphère pauvre en oxygène, et les matériaux solides sont soumis à un traitement mécanique préparatoire (3) et à un criblage mécanique, **caractérisé en ce que** la fraction grosse du criblage, séparée mécaniquement de métaux, est chargée dans un réacteur à bain de métal (6), **en ce que** la fraction fine du criblage est injectée dans le bain de métal (23) avec un gaz porteur pour la carburation du bain de métal (23), et **en ce que** le gaz de pyrolyse est utilisé, au moins en partie, en tant que gaz de combustion pour la fusion et le chauffage du bain de laitier (22) surnageant sur le métal du bain de métal (23).

2. Procédé selon la revendication 1, **caractérisé en ce qu'**en guise de gaz porteur pour l'injection de la fraction fine dans le bain de métal (23), on utilise un gaz inerte, notamment de l'azote.

3. Procédé selon la revendication 1 ou 2, **caractérisé en ce que** de l'oxygène ou de l'air est insufflé dans le bain de métal (23), par l'intermédiaire de buses (25) refroidies, notamment enveloppées d'hydrocarbures.

4. Procédé selon la revendication 1, 2 ou 3, **caractérisé en ce qu'**en guise de bain de métal (23) est présent un bain de fer.

5. Procédé selon l'une des revendications 1 à 4, **caractérisé en ce que** les gaz de pyrolyse sont brûlés avec de l'air chaud et/ou de l'oxygène par l'intermédiaire de brûleurs (26) débouchant dans l'enceinte du réacteur, au-dessus du bain de laitier (22).

6. Procédé selon la revendication 5, **caractérisé en ce que** l'air chaud de combustion est échauffé par les effluents gazeux du réacteur à bain de métal.

7. Procédé selon l'une des revendications 1 à 6, **caractérisé en ce qu'**une partie des gaz de pyrolyse est brûlée avec de l'air et les effluents gazeux refroidis du réacteur à bain de métal, qui quittent l'échangeur de chaleur (10), et **en ce que** les effluents gazeux de combustion, après exploitation énergétique, sont soumis à une épuration d'effluents gazeux (14).

8. Procédé selon l'une des revendications 1 à 7, **caractérisé en ce que** de l'épuration des effluents gazeux (14) on extrait des poussières, notamment des poussières de filtre, et on soumet celles-ci à un lavage basique (15), les boues d'hydroxydes formées étant ensuite cédées au bain de laitier (22) du réacteur à bain de métal (6).

9. Procédé selon l'une des revendications 1 à 8, **caractérisé en ce que** le bain de métal (23) du réacteur à bain de métal (6) est évacué en continu par l'intermédiaire d'un déversoir de trop-plein.

10. Dispositif pour la mise en oeuvre du procédé selon l'une des revendications 1 à 9, **caractérisé par** un tambour de pyrolyse, un dispositif de refroidissement pour les matériaux solides, un dispositif de criblage, et un réacteur à bain de métal (6) comprenant des buses de bain inférieur ou buses de fond (5, 25) débouchant dans le bain de métal (23) et destinées à introduire la fraction fine du dispositif de criblage et à introduire de l'air ou de l'oxygène, des brûleurs pour le gaz de pyrolyse, débouchant dans la chambre des gaz du réacteur à bain de métal (6), étant mis en place et un canal de débordage étant raccordé au bain de métal (23) pour l'évacuation de métal liquide, avec conservation d'une hauteur sensiblement constante du bain de métal (23).

11. Dispositif selon l'une des revendications 1 à 10, **caractérisé en ce qu'**à la suite de la sortie d'évacuation pour le laitier liquide en fusion, est monté un dispositif de granulation, notamment un dispositif de granulation à vapeur, pour la fabrication de granules pouzzolaniques.
